(19) Europäisches Patentamt
European Patent Office
Office européen des brevets

(11) Publication number: **0 026 982 A1**

(12) # EUROPEAN PATENT APPLICATION

(21) Application number: **80303088.1**

(22) Date of filing: **04.09.80**

(51) Int. Cl.[3]: **C 09 D 3/727,** C 09 D 7/06, C 08 K 5/10, C 08 L 33/06

(30) Priority: **07.09.79 US 73354**
**29.07.80 US 173244**

(43) Date of publication of application: **15.04.81**
**Bulletin 81/15**

(84) Designated Contracting States: **AT BE CH DE FR GB IT LI NL SE**

(71) Applicant: **Rohm and Haas Company, Independence Mall West, Philadelphia, Pennsylvania 19105 (US)**

(72) Inventor: **Friel, John Michael, 341 Beech Street, Warminster Pennsylvania (US)**

(74) Representative: **Angell, David Whilton et al, Rohm and Haas Company Patent Department Chesterfield House Barter Street, London WC1A 2TP (GB)**

(54) **Coating compositions containing mono- or diester coalescing agents and a substrate coated therewith.**

(57) Aqueous coating compositions comprising water-insoluble addition polymer having a Tg greater than 0°C contain, as coalescing agent, at least one ester of the formula:

(A) $R^1$-C(O)-$OR^2$;
(B) $R^3$-O-C-(O)-$R^3$-C(O)-O-$R^4$; and
(C) $R^2$-C(O)-O-$R^3$-O-C(O)-$R^4$;

wherein $R^1$ is alkyl or aryl, $R^2$ and $R^4$ are the same or different alkyl other than methyl and $R^3$ is alkylene, vinylene or, in formula (B), a single bond, the ester having acceptable hydrolytic stability and a normal boiling point of from 160°C to 290°C.

EP 0 026 982 A1

TITLE MODIFIED
see front page

COATING COMPOSITIONS CONTAINING MONO- OR DI-ESTER COALESCENTS

This invention is concerned with aqueous coating compositions, such as latexes, containing insoluble polymer and, as coalescent therefor, certain mono- or di-ester compounds.

Films made from many synthetic polymer latexes, particularly acrylic and vinyl ester latexes, are known to have excellent physical properties including superior elasticity, resilience, elongation at break, and pigment binding power; and excellent chemical properties, such as resistance to hydrolysis and solvent attack. Because of these properties, latexes of these polymers are used extensively in many interior and exterior coating applications.

Unfortunately, many such latexes having the aforementioned desirable properties are not film forming in many conventional coating applications. In order to overcome this deficiency, it has been a common practice to add a nonvolatile organic liquid, such as alkyl phthalate esters and phosphate esters (commonly referred to as plasticizers), to the latex. These plasticizers soften the resin particles thereby promoting their coalescence into a continuous film. However, their presence in the films made from the latexes render the films soft and tacky,

thereby causing dirt accumulation problems during drying and blocking problems during and after drying. Blocking is defined as the undesired adhesion between touching layers of material.

In order to overcome these problems, it has become a common practice to add a volatile plasticizer (often referred to as a "transient plasticizer" or fugitive coalescing agent) to the latex. See, for example, The Applications of Synthetic Resin Emulsions by H.Warson, published in 1972 by Ernest Benn Limited, London, Chapter III, "General Polymer Emulsion Application".

However, to be effective, the volatile plasticizer must not cause latex destabilization during its addition to the latex (commonly referred to as shock), must maintain a high coalescence efficiency and must not produce odour during evaporation. It has been found that certain compounds, such as aliphatic glycols, aliphatic glycol esters, aromatic glycol ethers, esters of phenol and acetate capped glycol ethers are acceptable as fugitive coalescing agents in most coating applications. Common examples of these include ethylene glycol phenyl ether; 2,2,4-trimethyl 1,3-pentanediolmonoisobutyrate; and diethylene glycol n-butyl ether acetate. Unfortunately, these plasticizers evaporate slowly and/or have poor hydrolytic stability, thus increasing drying times and intervals between recoating.

European Patent Application 79.102029, Publication No.0006571, discloses aqueous latex caulking compositions plasticized by a combination of a water insoluble adduct of an alkylene oxide and an alkyl phenol, and an ester type of plasticizer. There are well known differences between caulks and coatings. It is not obvious to employ plasticizers designed for caulks, which are formulated at high pigment volume and high solids and applied in thicknesses far greater than the thicknesses of the coatings of this invention which are generally applied by the usual painting procedures to form films having a dry thickness in the usual paint range, such as from about 0.1 to about 10 mils. Thus the volatility and other property requirements of a plasticizer for a caulk can be expected to be very different from those of a coating. No caulk plasticizer named in the reference is an ester coalescing agent for the latex paints of the instant application. The esters used in the caulks are essentially permanent plasticizers.

U.S.Patent 3,312, 652, discloses the use of 3-hydroxy-2,2,4-trimethylpentylisobutyrate as a coalescing agent. This compound may leave a coating containing it too slowly and be sensitive to water.

U.S.Patent 4,111,881, discloses polyoxyhydrocarbylene dihydrocarbyl ethers as coalescing agents for synthetic polymer latexes. These compounds may suffer from water sensitivity in the coating and can be absorbed perematurely into

porous substrates.

T.R.Hopper in Paint & Varnish Prod. 56 2(2), pages 31-33, 35, 37, and 64 (1966) discusses "Use of Phosphates, Phthalates and Adipates in Latex Paints, Lacquers and Vinyols". The specific adipate mentioned is dioctyl adipate which has a considerably higher boiling point than the esters of this invention.

U.S.Patent 2,536,470 discloses paint formulations based on polyvinyl acetate emulsions and containing various plasticizers. The plasticizers are taught as being more or less permanent and are structurally different from those of this invention. The patent describes the plasticizers in detail in column 5, line 20 to column 6, line 62. The various plasticizers disclosed are not sufficiently volatile for the purposes of this invention or have the types of shortcomings mentioned hereafter.

U.S. Patent 2,720,496 discloses the addition of plasticizers to polyvinyl acetate. The plasticizers structurally different from those of this invention, are described in column 2, lines 56 to 68, the esters among them being based on citric acid, phthalic acid or phosphoric acid.

U.S. Patent 3,790,520 discloses acrylate polymer compositions comprising aliphatic glycols and/or aliphatic glycol ethers. The presence of hydroxyl groups in these materials may result in the deficiencies described hereafter.

As a result of the higher price of energy and thus of air conditioning, a recent

development in architectural practice is the trend away from sealed windows back toward movable sash windows. Movable sash windows require coatings with a very high degree of block resistance to prevent sticking. Thus this property assumes a new importance in the coatings marketplace. Thus it is necessary for an aqueous paint to dry rapidly and to form a film with high block resistance while at the same time the necessity for film formation at low temperatures must not be lost.

We have now found that certain hydrolytically stable esters may function as coalescents and provide a desirable balance of block resistance and low temperature film formation.

According to this invention there is provided an aqueous coating composition comprising a water insoluble addition polymer preferably having a Tg above $0^{o}C.$, more preferably above $25^{o}C.$, most preferably above $40^{o}C.$ or even $50^{o}C.$, and containing an effective amount of certain ester coalescing agent. The addition polymer is generally obtained by emulsion polymerization. The improved composition of the invention results from the use as a coalescing agent, of certain mono- and di-ester compounds. These esters are hydrolytically stable, preferably highly so, and are particularly useful in alkaline coating formulations. The esters preferably have a normal boiling point between $160^{o}$ and $290^{o}C.$, more preferably at least $180^{o}C.$, most preferably between 215 and $285^{o}C.$ The esters are mono- and di-esters of lower alcohols other than methyl, lower glycols, monobasic acids, including aromatic acids and dibasic aliphatic acids. The

ester, generally the sole coalescing agent, is used in an effective amount, preferably up to 40%, more preferably between 5 and 25%, most preferably between 10 and 20% based on the weight of the addition polymer. In general, it is preferable that the ester have from 8 to 14 carbon atoms in the molecule, more preferably from 10 to 12. The compositions of this invention, based on the particular esters, may exhibit a number of desirable properties including one or more of: 1) surprising stability even when the compositions are alkaline, 2) high rate of hardness development, 3) high block resistance even at elevated temperature, and 4) ease of film formation at low temperature.

The present invention embraces clear compositions as well as aqueous base paints, containing

pigments, dyes and/or other coloring material, adapted for both interior and exterior uses.

The present invention is concerned with the modification of aqueous addition polymer dispersions, generally obtained most conveniently by direct emulsion polymerization. The most important of these dispersions used in making water-based paints are polymers, including homopolymers and copolymers, of: (1) vinyl esters of an aliphatic acid having 1 to 18 carbon atoms, especially vinyl acetate; (2) acrylic acid esters and methacrylic acid esters of an alcohol having 1 to 18 carbon atoms, especially methyl acrylate, ethyl acrylate, butyl acrylate, 2-ethylhexyl acrylate, methyl methacrylate, ethyl methacrylate and butyl methacrylate; and (3) mono- and di-ethylenically unsaturated hydrocarbons, such as ethylene, isobutylene, styrene, and aliphatic dienes, such as butadiene, isoprene, and chloroprene.

Poly(vinyl acetate) and copolymers of vinyl acetate with one or more of the following monomers; vinyl chloride, vinylidene chloride, ethylene, styrene, vinyltoluene, acrylonitrile, methacrylonitrile, and the acrylic and methacrylic acid esters mentioned above are well-known as the film-forming component of aqueous base paints. Similarly copolymers of one or more of the acrylic or methacrylic acid esters mentioned above with one or more of the following monomers: vinyl acetate, vinyl chloride, vinylidene chloride, styrene, vinyltoluene, acrylonitrile, and methacrylonitrile are also more or less conventionally employed in aqueous base paints. Homopolymers of ethylene, isobutylene, and styrene, and copolymers of one or more of these hydrocarbons with one or more esters, nitriles or amides of acrylic acid or of methacrylic acid or with vinyl esters, such as vinyl acetate and vinyl chloride, or with

vinylidene chloride are also used. The diene polymers are generally used in aqueous base paints in the form of copolymers with one or more of the following monomers: styrene, vinyltoluene, acrylonitrile, methacrylonitrile, and the above-mentioned esters of acrylic acid or methacrylic acid. It is also quite common to include a small amount, such as 1/2 to 7% or more, of an acid monomer in the monomer mixture used for making the copolymers of all three general types mentioned above by emulsion polymerization. Acids used include acrylic, methacrylic, itaconic, aconitic, citraconic, crotonic, maleic, fumaric, the dimer of methacrylic acid, and so on.

These aqueous dispersions may be made using one or more emulsifiers of anionic, cationic, or non-ionic type. Mixtures of two or more emulsifiers regardless of type may be used, except that it is generally undesirable to mix a cationic with an anionic type in any appreciable amounts since they tend to neutralize each other. The amount of emulsifier may range from about 0.1 to 6% by weight or sometimes even more, based on the weight of the total monomer charge. When using a persulfate type of initiator, the addition of emulsifiers is often unnecessary and this omission of the use of only a small amount, e.g., less than about 0.5%, of emulsifier, may sometimes be desirable from the cost standpoint (elimination of expensive emulsifier), and less sensitivity of the dried coating or impregnation to moisture, and hence less liability of the coated substrate to be affected by moisture, which, for instance, would produce coatings less liable to swelling or softening, particularly when subjected to humid atmospheres. The average particle size or diameter of these dispersed polymers may be from about 0.03 to 3 microns or even larger. The particle size, whenever

referred to herein, is the "weight average diameter". This number, expressed in microns, is determined using the ultra-centrifuge. A description of this method can be found in the Journal of Colloid Science 15, pp 563-572, 1960 (J. Brodnyan). In general, the molecular weight of these emulsion polymers are high, e.g. from about 100,000 to 10,000,000 viscosity average, most preferably above 500,000.

It is preferred that the glass transition temperature (Tg) of the polymer be above 0°C., more preferred that it be above 25°C. and most preferred that it be above 40°C. or even 50°C. A preferred upper limit of Tg is 100°C with 85°C being more preferable. The glass transition temperature may be estimated by the calculation based on the Tg of homopolymers of individual monomers as described by Fox, Bull. Am. Physics Soc. 1, 3, page 123 (1956). Tables of the Tg of homopolymers are given in "Polymer Handbook" Brandrup and Immergut, editors, 2nd Edition, (John Wiley & Sons, New York 1975) Section III, Part 2, Lee and Rutherford.

A particularly advantageous use of the coalescents of this invention is with very hard polymers, those having Tg greater than 40°C. and indeed even greater than 50°C. Hard polymers require comparatively high levels, such as up to 40% preferably 5% to 25% and most preferably 10 to 20% on polymer solids, of coalescent ester to achieve film formation at temperatures used for home painting, such as 10 to 30°C. The compositions may be clear or pigmented and are particularly useful in high gloss, water based enamels and varnishes. These compositions are formulated to produce coating which have gloss, so as to compete with trade sales oil based enamels and varnishes, without having the constraints and long term film stability problems of the oil base systems. As the high Tg polymers require a comparatively

high level of coalescing agent, the coalescing agent tends to be retained for long periods of time, thus agents of the prior art which were useful at low levels and which leave the coating film slowly cannot be used at the high levels needed for the high Tg polymers. The coalescing agents of this invention leave the film at a high rate thereby producing films having block resistance and hardness after a comparatively short period. It is preferred that the polymer be polymerized in the absence of the polyester coalescent, particularly in the absence of an effective amount of the coalescent. Coalescent present during the polymerization tends to lead to the formation of undesirable floc or gel particles in the latex.

The coalescing agents used in the present invention are mono-esters or di-esters having one of the following formulae:

(A) 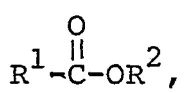

(B) 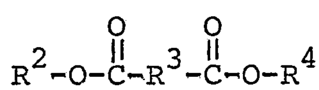 or

(C) 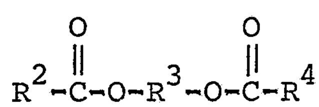

wherein $R^1$ is alkyl or aryl, $R^2$ and $R^4$ are the same or different alkyl groups other than methyl, and $R^3$ is alkylene or vinylene, or, in formula (B), a single bond. It is preferred that the total number of carbons in the ester be from 8 to 14, more preferably from 10 to 12. In formula (A) when $R^1$ is aliphatic it is preferably a 3 to 7

carbon group and $R^2$ is a preferably 4 to 8 carbon atom alkyl group; when $R^1$ is aromatic it is preferably a phenyl group and $R^2$ is preferably a 3 to 5 carbon atom alkyl group. In the case of the diesters of formula (B), $R^2$ and $R^4$ are preferably 3 or 4 carbon atom alkyl groups; $R^3$ may be a single bond,

when the diester is an oxalate, but is preferably a 2 to 5 carbon alkylene or vinylene group. When the polyester is of formula C) $R^3$ is preferably a 4 carbon atom alkylene group; and $R^2$ and $R^4$ are preferably 2 or 3 carbon atom alkyl groups.

The following is a table of the boiling points of several preferred esters. The first 15 being particularly prefered and the first 6 being the most preferred of all.

| Compound | Boiling Point, °C |
|---|---|
| butyl benzoate | 247 |
| diisopropyl adipate | ca. 250 |
| dibutyl maleate | 280.5 |
| dibutyl fumarate | 284 |
| diisopropyl fumarate | - |
| diisopropyl maleate | 228 |
| 1,3-butanediol diisobutyrate | - |
| 1,3-butanediol diisoproprionate | - |
| di-n-propyl adipate | - |
| isopropyl benzoate | 218 |
| amyl butyrate | 185 |
| isopropyl oxalate | 190 |
| butyl hexanoate | 208 |
| butyl butyrate | 165 |
| isoamyl butyrate | 178 |
| hexyl 2-ethylbutyrate | 232 |
| 2-ethylbutyl hexanoate | 238 |
| hexyl hexanoate | 244 |
| hexyl 2-ethylhexanoate | 254 |
| 2-ethylhexyl 2-ethylbutyrate | 255 |
| diisopropyl pimelate | ca. 275 |
| amyl benzoate | - |

In general methyl esters and ether-esters are to be avoided because they produce an instability in the paint system possibly because of ease of hydrolysis of the ester. This point is illustrated in the data of Example 1 below. Esters or diesters having substituted alkyl groups in the molecule, such as those with hydroxyl or amide groups, tend to leave the film too slowly or to be lacking in compatibility with the polymer and are therefore also to be avoided.

Ethers, ether-esters and compounds with the substituted alkyl groups described tend to have greater water solubility than the esters of the instant invention. The greater water solubility often leads to removal of these molecules from the wet paint film during the first stages of drying by wicking into porous substrates. The result is poor film formation due to the absence of coalescent as drying proceeds.

The coalescing agent is used in at least a coalescing amount which is an amount that will facilitate the formation of a continuous film on drying a coating under the conditions for the particular use. For trade sales coatings the drying is preferably under outdoor ambient conditions. The coalescing agent will be present in an amount which will vary with the latex and the ester used. In some formulations low amounts such as in the range of 1 to 5% will be useful; however, in most situations the amount used will be up to 25% with the range 10 to 20% being preferred; all being based on the weight of dry polymer.

The preferred formulations may be clear, that is, free of pigments, or pigmented and in either case may contain the conventional adjuncts used in paint formulation. The adjuncts may include thickeners, dispersants, defoamers, surface active agents, pigments, biocides and protective colloids. In pigmented systems the coatings composition may contain about 15 to 90% latex polymer solids, about 10 to about 85% adjuncts on a dry basis and a level of coalescing agent indicated above. The composition will ordinarily also contain between about 25 and about 75 weight percent of volatiles principally water.

The compositions of the present invention are applied to substrates by the usual painting procedures such as brushing, spraying, rolling, dipping, flow

coating etc., to form films having a dry thickness in the usual paint range such as from about 0.1 to about 10 mils.

In the following examples, which are illustrative of the invention, parts and percentages are by weight unless otherwise specified.

## Preparation of Formulations

Paint formulations prepared in the following manner are used in Examples 1, 2 and 3. Variants are used in other examples as indicated.

| Ingredients | Weight Percent |
|---|---|
| Diethylene glycol monomethyl ether | 4.46 |
| Sodium salt of diisobutylene-maleic anhydride copolymer | 1.22 |
| Alkaryl polyether surfactant (Wetting Agent) | .20 |
| Foamaster™ AP (Defoamer) | .10 |
| Zopaque™ RCL-9 (Rutile $TiO_2$) | 21.51 |

Grind the above materials on a high speed mill (Cowles) for 20 minutes and letdown at a slower speed as follows:

| | | |
|---|---|---|
| Water | | 3.0 |
| Polymer latex at 45% solids (See Ex. 1) | | 58.76 |
| Diethylene glycol monomethyl ether | Premix | .78 |
| Coalescent | Premix | 3.96 |
| Super-Ad-It™ (Anti-microbial agent) | Premix | .10 |
| Foamaster™ AP (Defoamer) | Premix (Adjust to pH 8.0) | .15 |
| Water | Premix (Adjust to pH 8.0) | 1.54 |
| DMAE (Dimethylaminoethanol-base | Premix (Adjust to pH 8.0) | .21 |
| Low molecular wt. acrylic copolymer at 30% Solids (Rheology Modifier) | Premix (Adjust to pH 8.0) | 1.75 |
| Adjust to 75-80 KU* and pH 7.8 to 8.2 with water and/or DMAE | | 1.96 |
| | | 100.00 |

*Krebs Units as defined by Geddes and Dawson Ind. and Eng. Chem., Ind. Ed., Vol. 34, p 163, Feb. 1942.

Unless specified otherwise hardness and block retention are measured by the method given in Table II

below and coalescent retention is determined by a gas-liquid chromatography measurement performed on a sample of paint recovered from an impermeable substrate.

Example 1 - Paint Stability

The effects of two controls (Texanol and butyl Carbitol acetate, butyl benzoate and a series of adipate esters on the storage stability of paints, formulated as given above, are determined using a Corning pH meter, Model 7 and a Stormer Viscometer, in accordance with A.S.T.M. standard Method D-562, herein incorporated by reference. Paints containing the various coalescents are stored at 60°C. for 10 days; the pH and viscosity are determined before and after aging. Results are tabulated in Table I. The latex polymer employed is a polymer of monomers comprising acrylate and methacrylate esters, styrene and unsaturated acid, the polymer having a Tg of about 50°C as determined by measurement of torsional modulus of a film as a function of temperature.

TABLE I

High Temperature Storage Stability of Paints

| Coalescing Agent Type | Level (%) | Initial pH/Viscosity, KU[4] | 10 Days at 60°C. pH/Viscosity, KU[4] |
|---|---|---|---|
| Texanol™ [2] | 15 | 7.8/86 | 7.8/84 |
| Butyl Carbitol Acetate™ [3] | 15 | 7.8/82 | 6.4/ 140 |
| Dimethyl Adipate (90% Grade[1]) | 15 | 7.7/76 | 6.4/ 140 |
| Diethyl Adipate | 15 | 8.4/84 | 7.5/101 |
| Di-n-propyl Adipate | 15 | 8.2/84 | 7.8/95 |
| Diisopropyl Adipate | 15 | 8.3/86 | 8.2/85 |
| | | 9.2/101 | 9.0/104 |
| Dibutyl Adipate | 15 | 7.7/87 | 7.6/88 |
| Butyl Benzoate | 15 | 8.4/86 | 8.4/89 |
| | | 9.0/101 | 9.1/109 |

1 Available as DBE-3 from E. I. duPont deNemours & Co.

2 Texanol is 2,2,4-trimethyl pentanediol-1,3-monoisobutyrate; boiling point 246°C.

3 Butyl Carbitol Acetate is diethylene glycol monobutyl ether acetate.

4 Krebs units.

In Table I, a paint is considered stable if there is no significant change in either pH or viscosity during the storage period. While the high temperature storage stability of diethylene glycol monobutyl ether acetate is very poor, for the series of adipate esters, stability improves going from dimethyl to dibutyl and becomes acceptable at diethyl adipate. The storage stability of paints coalesced with butyl benzoate is very good.

The decrease in pH and increase in viscosity on storage at 60°C. are both believed to be evidence of hydrolysis of the coalescing agent when the agent contains an ester group. Regardless of the chemical mechanism involved in these changes the ester coalescing agents of this invention formulated into a paint and tested by the procedure of this Example are classified as follows:

| Hydrolytic Stability | Property Change in 10 days at 60°C. pH | Viscosity (KU) |
|---|---|---|
| excellent | below 0.5 | below 15 |
| good | below 0.8 | below 20 |
| fair (acceptable) | below 1.0 | below 25 |
| unacceptable | 1.0 or more | 25 or more |

Thus an ester is of excellent hydrolytic stability when the paint formulated therefrom exhibits a change of less than 0.5 pH units and less than 15 Krebs units on ageing 10 days at 60°C.

Example 2 - Hardness Development and Block Resistance

Both the block resistance, the tendency of a paint film to stick to itself or another surface when pressure is applied, and the hardness of a paint film, as measured by a Tukon Hardness Tester No. FB-1066 with a 25g. load (Wilson Instrument Division of American Chain & Cable Co. Inc.), are dependent on the rate of escape of a coalescent from a paint film. Hardness and block resistance are measured for a series of paints,

formulated as given above, containing various coalescents, including: butyl benzoate, a series of adipates, and Texanol as the control coalescent. Results are shown in Table II. The polymer latex is the same as that in Example 1.

TABLE II

Hardness Development and Block Resistance of Paints

| Type | Level (%) | Hardness (KHN)[1] | | 50° Block Resistance[2] | |
|---|---|---|---|---|---|
| | | 1 Wk Dry | 2 Wk Dry | 1 Wk Dry | 2 Wk Dry |
| Texanol | 15 | .8 | .8 | 0 | 7- |
| Diethyl Adipate | 15 | 4.0 | 4.5 | 7 | 8 |
| Di-n-propyl Adipate | 15 | 1.2 | 2.2 | 7+ | 8+ |
| Diisopropyl Adipate | 15 | 1.8 | 2.0 | 6+ | 8- |
| Butyl Benzoate | 15 | 2.7 | 3.0 | 7 | 8 |

1 Hardness is measured in Knoop Hardness Numbers, defined in A.S.T.M. Method D1474, (KHN) on 1.5 mil films which have been drawndown on Bonderite™ 1000 cold rolled steel and air dried at 25°C/55% R.H. (relative humidity) for the specified period of time. The higher the KHN, the harder the film.

2 Block resistance is determined by casting a 1.5 mil dry film of paint on white Leneta™ charts and allowing the paints to dry at 25°C/55% R.H. for the specified period of time. Two squares of approximately 2 sq. in. each are cut from the coated chart, sandwiched together, paint film to paint film and placed on an aluminum tray. A 1000 g. weight is then placed on a #8 rubber stopper (large end up) on top of each square so that the pressure under the stopper is approx. 2 psi. The entire apparatus is then placed in a 50°C. oven for 30 min. After 30 min. the apparatus is removed from the oven, diassembled, and allowed to equilibrate to room temp. for 15 min. before separating the coated squares. The paint films are then subjectively rated for the degree to which the squares stick together using a scale of 0 to 10. 0 is a complete seal between the two paint films and 10 is no sticking whatsoever.

Paints containing butyl benzoate or the adipate esters listed in Table II develop hardness and block resistance at a faster rate than the Texanol containing control paint, despite the proximity of their boiling points.

Example 3 - Low Temperature Film Formation (10°C/70% R.H.)

In this test the coalescent containing paints, made as in Example 1, are brush applied to oak hardwood, drawn down on Leneta black vinyl panels and allowed to dry at 10°C/70% R.H. for 24 hours before being examined for film cracking under 10X magnification. The results obtained are presented in Table III.

TABLE III

Film Formation at 10°C/70% R.H.

| Coalescing Agent | | Film Cracking[2] | |
|---|---|---|---|
| Type | Level (%) | Over Wood | Over Vinyl |
| Texanol | 15 | None | None |
| Diethylene glycol monobutyl ether[3] | 15 | VH | None |
| Diethylene glycol monobutyl ether[3] | 20 | Mod-H | None |
| Butyl Carbitol Acetate | 15 | None | None |
| Dimethyl Adipate (90% Grade[1]) | 15 | None | None |
| Diethyl Adipate | 15 | None | None |
| Dipropyl Adipate | 15 | None | None |
| Diisopropyl Adipate | 15 | None | None |
| Dibutyl Adipate | 15 | None | None |
| Butyl Benzoate | 15 | None | None |
| None | 15 | VH | VH |

1 Available as DBE-3 from E.I. duPont deNemours & Co.

2 Paints are equilibrated at 10°C/70% R.H. for 2 hours before testing; VH = very heavy, Mod-H = moderately heavy.

3 Butyl Carbitol (T.M.)

All of the coalescents in Table III with the exception of Butyl Carbitol are efficient coalescing agents for the latex polymer.

Example 4 - Hardness Development in a Clear Film

Coalescent is added to an all-acrylic latex based on methyl methacrylate and butyl acrylate, having a Tg of about 22°C, which is then cast to form a clear film. The coalescents employed are butyl benzoate, of this invention, and Texanol, a control. Under both ambient and elevated temperature drying conditions the butyl benzoate escapes from the all-acrylic latex significantly faster than the Texanol and gives a more rapid hardness development as indicated in Table IV below. This difference in rates is unexpected in view of the 1° difference in boiling point between the two coalescents, the Texanol being the lower boiling.

TABLE IV

Coalescent Retention and Hardness Development of All Acrylic Latex (46.5% solids) Clear Film

| | Coalescent (15% on latex solids) | | | |
|---|---|---|---|---|
| | Texanol | | Butyl Benzoate | |
| Drying Condition | KHN* | % Retained | KHN* | % Retained |
| 3 Days ambient | 0.4 | -- | 0.6 | -- |
| 8 Days ambient | 0.5 | 61.3 | 0.7 | 22.7 |
| 2 Weeks ambient | 0.5 | 50.7 | 1.0 | 15.3 |
| 3 Weeks ambient | 0.5 | 43.3 | 1.2 | 12.0 |
| Baked 71°C/20 minutes | 0.6 | 52.7 | 0.9 | 18.0 |
| Baked 93°C/20 minutes | 1.7 | 8.7 | 3.0 | below 0.3 |

1 Hardness is measured in Knoop Hardness Numbers, defined in A.S.T.M. Method D1474, (KHN) on 1.5 mil films which have been drawndown on Bonderite™ 1000 cold rolled steel and air dried at 25°C/55% R.H. (relative humidity) for the specified period of time. The higher the KHN, the harder the film.

2 Block resistance is determined by casting a 1.5 mil dry film of paint on white Leneta™ charts and allowing the paints to dry at 25°C/55% R.H. for the specified period of time. Two squares of approximately 2 sq. in. each are cut from the coated chart, sandwiched together, paint film to paint film and placed on an aluminum tray. A 1000 g. weight is then placed on a #8 rubber stopper (large end up) on top of each square so that the pressure under the stopper is approx. 2 psi. The entire apparatus is then placed in a 50°C. oven for 30 min. After 30 min. the apparatus is removed from the oven, diassembled, and allowed to equilibrate to room temp. for 15 min. before separating the coated squares. The paint films are then subjectively rated for the degree to which the squares stick together using a scale of 0 to 10. 0 is a complete seal between the two paint films and 10 is no sticking whatsoever.

Example 5 - Block and Hardness Development of a Vinyl Acetate Paint

A vinyl acetate paint is prepared employing the following as a control formulation:

| Ingredient | Parts by Weight |
|---|---|
| Propylene glycol | 63.0 |
| Sodium salt of diisobutylene-maleic anhydride copolymer (dispersant) | 11.0 |
| Nopco(R) NDW (defoamer) | 2.0 |
| TiPure(R) R-900 (rutile $TiO_2$ DuPont) | 275.0 |

Grind the above materials on a high speed mill (Cowles) for 20 minutes and letdown at a slower speed as follows:

| | | |
|---|---|---|
| Water | | 50.0 |
| Dibutyl phthalate | | 6.8 |
| Vinyl acetate latex (Tg 29°C) at 50% Solids | | 537.5 |
| Propylene glycol | Premix | 14.0 |
| Texanol(R) | Premix | 26.6 |
| Super-Ad-It(R) microbiocide | Premix | 1.0 |
| Triton(R) GR-7M (surfactant, Rohm and Haas) | Premix | 2.0 |
| Nopco NDW | | 3.0 |
| Hydroxyethylcellulose (Natrosol(R) 250 MHR Hercules) at 2.5% solids | | 52.0 |
| Water | | 52.0 |

(last two items to give viscosity of 76 to 80 KU)

For the formulation employing the coalescent of this invention, both the dibutyl phthalate and the Texanol are replaced by n-butyl butyrate. Block resistance and hardness development of samples of the two paints are determined following the procedures outlined in Example 2. The results are given in Table V, below. It is

seen that the coalescent of this invention is more effective in producing both a hard film and a block resistant film than the combination of the materials of the prior art.

TABLE V

Block Resistance and Hardness Development of a Vinyl Acetate Latex Paint

| Coalescent | 10% Texanol/ 2.5% Dibutyl Phthalate | 12.5% n-Butyl Butyrate |
|---|---|---|
| 3 Days Air Dried | | |
| Hardness (KHN) | 0.43 | 2.91 |
| 100°F (38°C) block resistance[1] | 0 | 7 |
| 120°F (49°C) block resistance[2] | 0 | 0 |
| 2 Weeks Air Dried | | |
| Hardness (KHN) | 0.68 | 6.3 |
| 100°F (38°C) block resistance[1] | 7 | 8 |
| 120°F (49°C) block resistance[2] | 0 | 5- |

[1] 2 psi for 2 hours

[2] 2 psi for 30 minutes

Example 6 - Block, Hardness and Coalescent Retention of Clear Acrylic Varnish

The following formulation is used in preparing clear acrylic varnishes having 15% coalescent based on the acrylic latex solids; the latex being that of Example 1. The coalescents used are given in Table VI below and include, as a control, Texanol. In inspecting the data of Table VI it should be borne in mind that the different coalescents may differ in their ability to soften the polymer thus some varnish samples after one or two weeks may have modest amounts of the coalescents of this invention yet still be comparatively soft. It

is clear that the block resistance of coatings formulated utilizing the coalescents of this invention are far better than the control even after one week and within a month the hardness of the film formed utilizing the coalescents of this invention exceeds that of the control.

TABLE VI

Block Resistance, Coalescent Retention and Hardness Development of Clear Acrylic Latex Varnishes

| | 1 Week | | | 2 Weeks | | | 3 Weeks | | | 4 Weeks | | 6 Weeks | | 8 Weeks |
|---|---|---|---|---|---|---|---|---|---|---|---|---|---|---|
| Coalescent | BR | CR | KHN | BR | CR | KHN | BR | CR | KHN | BR | KHN | BR | KHN | KHN |
| Texanol | 2 | 82 | 0.79 | 2 | 81 | 1.0 | 2 | 82 | 0.94 | 1 | 1.1 | 6- | 1.4 | 1.3 |
| Butyl benzoate | 8 | 28 | 2.1 | 9 | 27 | 2.0 | 9 | 24 | 4.5 | 9 | 4.3 | 9+ | 4.7 | 6.7 |
| Diisopropyl adipate | 7 | 41 | 1.2 | 7+ | 37 | 0.91 | 8 | 34 | 1.7 | 8+ | 1.8 | 9- | 2.7 | 4.0 |
| Dibutyl maleate | 7 | 49 | 0.50 | 8 | 40 | 1.3 | 9- | 40 | 1.1 | 9- | 2.2 | 9- | 2.2 | 4.0 |

BR = Block resistance (2 psi, 120°F, 30 min.)

CR = Coalescent retention as a percentage of initial level

Example 7 - Deeptone Acrylic Paint

A deeptone acrylic paint based on the same polymer latex as used in Example 1 is formulated as follows:

| Material | | Parts by Weight |
|---|---|---|
| Water | | 53.8 |
| Polymer latex of Example 1 at 45.0% Solids | | 559.0 |
| Diethylene glycol monomethyl ether | | 43.0 |
| Coalescent | | 29.0 |
| Foamaster[R] AP (defoamer) | | 4.0 |
| Dowicil[R] 75 (anti-microbial agent) | Premix | 1.3 |
| Water | Premix | 23.0 |
| Aurosperse[R] W-7012 (carbon black colorant) | | 20.0 |
| Water | Premix | 58.6 |
| Dimethylaminoethanol | Premix | 6.0 |
| Acrylic copolymer-rheology modifier at 30% Solids | Premix | 32.3 |
| Triton(R) GR-7M (surfactant, Rohm and Haas) | | 2.0 |
| Water | | 20.0 |

Using this formulation, a paint is made using diisopropyl adipate as the coalescent and in a second sample Texanol as a control; both being 12% coalescent on the latex solids. After one week of drying under ambient conditions the block resistance is measured at 2 psi, 120°F, and 30 minutes whereupon it is found that the sample formulated with diisopropyl adipate has a rating of 7 and the sample formulated with Texanol a rating of 0.

Example 8 - Acrylic Latex Based White Gloss Paint

A white gloss paint based on the polymer latex of Example 1 is formulated as follows:

| Ingredient | | Parts by Weight |
|---|---|---|
| Diethylene glycol monomethyl ether | | 43.3 |
| Sodium salt of diisobutylene-maleic anhydride copolymer | | 7.5 |
| Triton(R) CF-10 (wetting agent, Rohm and Haas Co.) | | 1.7 |
| Foamaster(R) DS (defoamer) | | 2.5 |
| TiPure(R) R-900 (rutile $TiO_2$) | | 187.1 |

Grind the above on a high speed mill (Cowles) for 20 min. and letdown at a slower speed as follows:

| | | |
|---|---|---|
| Water | | 83.8 |
| Polymer latex of Example 1 at 45% Solids | | 500.0 |
| Coalescent | | 33.7 |
| DowicilR 75 (anti-microbial agent, Dow) | Premix | 1.3 |
| Water | | 23.0 |
| Water | Premix | 55.0 |
| Dimethylaminoethanol-base | | 5.0 |
| Acrylic copolymer-rheology modifier at 30% solids) | | 30.0 |
| Water | | 20.0 |
| | | 993.9 |

Film hardness (KHN) and block resistance (BR) data are found in Table VII below for paints utilizing Texanol, diisopropyl adipate, and n-butyl butyrate as the coalescents. The data in the table show very clearly that the low boiling point n-butyl butyrate, as a coalescent, leads to high hardness in an extremely short time of drying. Although little different in boiling point, and if anything slightly higher boiling, when compared to Texanol, diisopropyl adipate also developes hardness much faster than the Texanol. In the case of block resistance, both of the coalescents of this invention are much better than Texanol and in order

to differentiate between the low boiling and high boiling esters of this invention measurements are made at a higher temperature, 140°F, which show the greater block resistance of the lower boiling material. The high temperature storage stability of these paints is good as measured by pH and viscosity measurements made after storage for ten days at 60°C. In low temperature film formation n-butyl butyrate is found to be less effective than isopropyl adipate presumably because of its high evaporation rate thus implying that its area of greatest utility may be in industrial coatings applications where controlled factory conditions prevail and where greatest advantage may be made of its rapid evaporation from the film.

TABLE VII

Block Resistance and Hardness Development of Acrylic Latex Paint

| Coalescent (15% on latex solids) | Boiling Point, °C | 4 Day Dry KHN | 1 Week Dry KHN | 2 Week Dry KHN | 2 Week Dry BR | 3 Week Dry KHN | 3 Week Dry BR | 5 Week Dry KHN | 5 Week Dry BR* |
|---|---|---|---|---|---|---|---|---|---|
| Texanol | 246 | .54 | .71 | .90 | 0 | .90 | 3 | 1.1 | 4(1) |
| Diisopropyl adipate | ca. 250 | 1.4 | 1.95 | 2.7 | 7 | 3.47 | 7+ | 4.3 | 8(3) |
| n-Butyl butyrate | 165 | 4.8 | 5.7 | 8.4 | 7 | 9.41 | 7+ | 10.4 | 8(6+) |

*Numbers in parenthesis are block resistance data obtained at 140°F, all others are at 120°F.

Example 9 - Gloss Paint Employing High Tg Polymer Latex

A copolymer based on acrylonitrile, styrene and acrylic ester, the polymer having a Tg of about 60°C, is employed as the binder in the following white gloss paint formulation:

| Ingredient | | Parts by Weight |
|---|---|---|
| Diethylene glycol monomethyl ether | | 39.7 |
| Sodium salt of diisobutylene-maleic anhydride copolymer (dispersant) | | 10.5 |
| Triton CF-10 (wetting agent, Rohm and Haas) | | 1.7 |
| Foamaster[R] DS (defoamer) | | 1.0 |
| TiPure R-900 (rutile $TiO_2$, DuPont) | | 187.1 |
| Grind the above on a high speed mill (Cowles) for 20 minutes and letdown at slower speed as follows: | | |
| Water | | 20.0 |
| Binder latex at 43% solids | | 523.2 |
| Coalescent* | Premix | 45.0 |
| Super-Ad-It[R] | Premix | 1.0 |
| Diethylene glycol monomethyl ether | Premix | 3.6 |
| Low molec.wt. acrylic copolymer (rheology modifier) | Premix | 60.0 |
| Water | Premix | 52.8 |
| Dimethylaminoethanol | Premix | 7.2 |

*20% on binder latex solids level.

The formulation given is for 20% coalescent on binder latex solid level. Suitable adjustment is made in the amount of coalescent to obtain other levels of coalescent employed in this example. Table VIII gives the results of determining hardness as a function of drying time and of low temperature film formation studies, carried out as in Example 3 above, for three coalescents of this invention and two controls, Texanol and dibutyl phthalate. Dibutyl phthalate has a boiling

point of about 335°C, above the boiling point of the coalescents of this invention and, as is seen in Table VIII leads to poor hardness development in a paint film. The three ester coalescents of this invention give better hardness development than the corresponding levels of Texanol. With this comparatively high Tg latex it is seen that at least 25% Texanol is required for good low temperature film formation whereas only 20% of the coalescents of this invention are needed.

With 30, 35 and 40% of the coalescents of this invention the low temperature film formation remains excellent but the rate of hardness development is somewhat protracted and the film does become harder than the film employing either of the controls. With higher Tg latex polymers the higher levels of coalescents of this invention, 30, 35 and 40% on latex polymer, are useful in obtaining good low temperature film formation while still maintaining acceptable hardness development whereas the Texanol and dibutyl phthalate materials do not achieve an acceptable balance of these properties.

Table VIII

Low Temperature Film Formation and Hardness of Paint Film

| Coalescent | Hardness (KHN) Drying Time 3 Days | 1 Week | 2 Weeks | Film Cracking Substrate Black Vinyl | Wood |
|---|---|---|---|---|---|
| 10% Texanol | 2.7 | 4.6 | 5.4 | v. heavy | heavy |
| 15% Texanol | 1.5 | 2.0 | 3.4 | sl.-med. | heavy |
| 20% Texanol | 0.8 | 1.0 | 1.8 | none | sl.-med. |
| 25% Texanol | 0.8 | 0.9 | 1.5 | none | trace |
| 15% dibutyl phthalate | 1.0 | 1.2 | 2.2 | sl. | heavy |
| 15% butyl benzoate | 2.2 | 3.6 | 5.9 | sl. | med. |
| 20% butyl benzoate | 1.9 | 3.4 | 6.6 | none | none |
| 15% diisopropyl adipate | 1.5 | 2.5 | 5.0 | none | med. |
| 20% diisopropyl adipate | 1.0 | 2.3 | 5.0 | none | none |
| 15% dibutyl maleate | 1.8 | 2.6 | 4.5 | none | sl.-med. |
| 20% dibutyl maleate | 1.0 | 2.1 | 4.5 | none | none |
| 25% dibutyl maleate | 0.6 | 1.0 | 3.4 | none | none |

CLAIMS:

1. An aqueous coating composition comprising a water-insoluble addition polymer having a Tg greater than $0^{o}C$. and an effective amount of a coalescing agent comprising an ester of at least one of the following formulae:

(A) $R^1-C(O)-OR^2$;

(B) $R^2-O-C(O)-R^3-C(O)-O-R^4$; and

(C) $R^2-C(O)-O-R^3-O-C(O)-R^4$;

wherein $R^1$ is alkyl or aryl, $R^2$ and $R^4$ are the same or different alkyl other than methyl, and $R^3$ is alkylene, vinylene or, in formula(B), a single bond; the ester having acceptable hydrolytic stability and a normal boiling point of from $160^{o}$ to $290^{o}C$.

2. A composition as claimed in Claim 1 wherein the ester has a normal boiling point of at least $180^{o}C$.

3. A composition as claimed in Claim 1 wherein the ester has a normal boiling point of from 215 to $285^{o}C$.

4. A composition as claimed in any of claims 1 to 3 wherein the number of carbon atoms in the ester is from 8 to 14 and the hydrolytic stability is good, as defined herein.

5. A composition as claimed in claim 4 wherein the number of carbon atoms in the ester is from 10 to 12 and the hydrolytic stability is excellent, as defined herein.

6. A composition as claimed in Claim 1 where, in formula (A), $R^1$ is an aliphatic group containing from 3 to 7 carbon atoms and $R^2$ is $C_4$-$C_8$ alkyl, in formula (B), $R^2$ and $R^4$ are alkyl groups containing 3 or 4 carbon atoms and $R^3$ is a single bond, $C_2$-$C_5$ alkylene or vinylene and, in formula (C), $R^2$ and $R^4$ are alkyl groups containing 2 or 3 carbon atoms and $R^3$ is an alkylene group containing 4 carbon atoms.

7. A composition as claimed in Claim 1 wherein the ester coalescing agent comprises at least one of butyl benzoate, diisopropyl adipate, dibutyl maleate, 1,3-butanediol diisobutyrate, 1,3-butanediol diisoproprionate, di n-propyl adipate, dibutyl fumarate, isopropyl benzoate, diisopropyl fumarate, diisopropyl maleate, hexyl-2-ethylbutyrate, 2-ethylbutyl hexanoate, hexyl hexanoate, hexyl-2-ethylhexanoate, 2-ethylhexyl-2-ethylbutyrate, diisopropyl pimelate, amyl benzoate, amyl butyrate, isopropyl oxalate, butyl hexanoate, butyl butyrate, and isoamyl butyrate.

8. A composition as claimed in any of claims 1 to 7 wherein the Tg of the polymer is greater than 25°C.

9. A composition as claimed in Claim 8 wherein the Tg is greater than 40°C.

10. A composition as claimed in any of claims 1 to 9 wherein the amount of ester coalescing agent is up to 40% by weight of the polymer solids.

11. A composition as claimed in claim 10 wherein the amount of ester is from 5 to 25% by weight of the polymer solids.

12. A composition as claimed in Claim 11 wherein the amount of ester is from 10 to 20% by weight of the polymer solids.

13. A composition as claimed in any preceding claim wherein the pH of the composition is greater than 7.

14. A composition as claimed in any preceding claim wherein the polymer contains units of one or more of:
(a) at least one vinyl ester of at least one aliphatic acid containing from 1 to 18 carbon atoms;
(b) at least one ester of acrylic and/or methacrylic acid and at least one alcohol containing from 1 to 18 carbon atoms; and
(c) at least one mono- and/or di- ethylenically unsaturated hydrocarbon.

15. A composition as claimed in Claim 14 wherein the polymer is a polymer of a monomer charge comprising at least 50% by weight of the monomer(s) of one or more esters of acrylic and/or methacrylic acid.

16. A composition as claimed in Claim 15 wherein the polymer is a polymer of a monomer charge comprising from 50 to 100% by weight of the monomer(s) of at least one ester of acrylic and/or methacrylic acid, from 0 to 40% by weight of at least one ethylenically unsaturated aromatic hydrocarbon and from 0 to 10% by weight of at least one ethylenically unsaturated carboxylic acid.

17. A composition as claimed in Claim 16 wherein the polymer is a polymer of a monomer charge comprising from 60 to 80% by weight of the monomers of at least one ester of acrylic and/or methacrylic acid, from 20 to 35% by weight of at least one ethylenically unsaturated aromatic hydrocarbon and from 3 to 8% by weight of acrylic and/or methacrylic acid.

18. A composition as claimed in Claim 14 wherein the polymer is a polymer of a monomer charge comprising at least 50% by weight of the monomer(s) of vinyl acetate.

19. A composition as claimed in any of claims 1 to 13 wherein the polymer contains units of acrylonitrile and/or styrene.

20. A substrate bearing a coating of a composition according to any of claims 1 to 19.

European Patent Office

# EUROPEAN SEARCH REPORT

Application number 0026982

EP 80303088.1

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | GB - A - 976 439 (THE DISTILLERS COMPANY LTD.)<br>+ Totality +<br>-- | 1-6,8-12,14-18,20 | C 09 D 3/727<br>C 09 D 7/06<br>C 08 K 5/10<br>C 08 L 33/06 |
| | GB - A - 646 945 (BRITISH CELANESE LTD.)<br>+ Totality +<br>-- | 1,2,10,20 | |
| | US - A - 3 466 223 (A.D. BEELER et al.)<br>+ Totality +<br>-- | 1,2,10-12,20 | TECHNICAL FIELDS SEARCHED (Int.Cl. 3)<br>C 09 D<br>C 08 K<br>C 08 L |
| X | GB - A - 1 033 466 (THE DISTILLERS COMPANY LTD.)<br>+ Totality +<br>---- | 1-11,14-18,20 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 09-12-1980 | PAMMINGER |